# EUROPÄISCHE PATENTSCHRIFT

(11) **EP 4 438 559 B1**
(45) Veröffentlichungstag und Bekanntmachung des Hinweises auf die Patenterteilung: **27.08.2025**
(21) Anmeldenummer: 23164737.1
(22) Anmeldetag: 28.03.2023
(51) Int. Cl.: C01F 7/56, C01B 25/32, C01G 49/10, C01B 25/37, C01G 49/00, C01G 49/14

(54) **VERFAHREN ZUR HERSTELLUNG VON EISENCHLORID AUS EISEN-PHOSPHATVERBINDUNGEN**
PROCESS FOR THE PREPARATION OF IRON CHLORIDE FROM IRON PHOSPHATE COMPOUNDS
PROCÉDÉ DE PRÉPARATION DE CHLORURE FERRIQUE À PARTIR DE COMPOSÉS DE PHOSPHATE FERRIQUE

(43) Veröffentlichungstag der Anmeldung: 02.10.2024
(73) Patentinhaber: LANXESS Deutschland GmbH, 50569 Köln (DE)
(72) Erfinder: BOLL, Matthias, 51061 Köln (DE)

(56) Entgegenhaltungen:
- ADAM C ET AL: "Thermochemical treatment of sewage sludge ashes for phosphorus recovery", WASTE MANAGEMENT, ELSEVIER, NEW YORK, NY, US, vol. 29, no. 3, 1 March 2009 (2009-03-01), pages 1122 - 1128, XP025769686, ISSN: 0956-053X, [retrieved on 20081125], DOI: 10.1016/J.WASMAN.2008.09.011
- DAVID MARKUS MONTAG, 22 February 2008 (2008-02-22), XP055461446, Retrieved from the Internet <URL:http://darwin.bth.rwth-aachen.de/opus3/volltexte/2008/2298/pdf/Montag_David.pdf> [retrieved on 20180321]

## Beschreibung

Die Erfindung betrifft ein Verfahren zur Herstellung von Eisenchlorid aus EisenPhosphatverbindungen enthaltendem Material.

Die Herstellung von Eisenchloriden wie Fe(II)Cl₂ und Fe(III)Cl₃ erfolgt meistens ausgehend von metallischem Eisen. Es gibt aber zunehmend großvolumige eisenhaltige Verbindungen, die bislang als alternative Quelle zur Herstellung von Eisenchloriden nicht im Fokus standen. Als Beispiele lassen sich das Lithiumeisenphosphat (LFP) und das Lithiumeisenmanganphosphat (LFMP) sowie ihre ggf. mit weiteren Elementen, insbesondere Metallen dotierten Modifikationen nennen, die als Kathodenmaterialien - auch als cathode active materials (CAM) bezeichnet - für Batterien eingesetzt werden. Für diese besteht nach ihrem Lebenszyklus ein Recyclingbedarf, womit sie als eine attraktive Eisen-Rohstoffquelle in Frage kommen.

Den synthetischen Eisenphosphatverbindungen wie LFP und LFMP ist daher gemeinsam, Eisenphosphatverbindungen zu enthalten, die sich als weitere Zugänge zur Herstellung von Eisenchloriden anbieten.

Aufgabe der Erfindung war es daher, ein entsprechendes Verfahren ausgehend von Eisenphosphatverbindungen bereitzustellen.

Überraschend wurde nun ein Verfahren zur Herstellung von Eisenchloriden gefunden, das dadurch gekennzeichnet ist, dass man
i) ein Material enthaltend wenigstens eine Eisenphosphatverbindung mit wenigstens einem Alkalichlorid und/oder wenigstens einem Erdalkalichlorid bei einer Temperatur von 200 bis 1100°C, in einer Inertgasatmosphäre, vorzugsweise enthaltend weniger als 200 ppm, insbesondere weniger als 100 ppm Sauerstoff, umsetzt und
ii) das gebildete Eisenchlorid im Abgasstrom ableitet und isoliert.

### Eisenphosphatverbindungen

Als Eisenphosphatverbindungen kommen beispielsweise Eisenphosphate, insbesondere Eisen(II)-phosphat, Eisen(III)-phosphat und Eisen(III)-Pyrophosphatase, Lithiumeisenphosphate (LFP) wie Triphylin oder Lithiumeisenmanganphosphate (LFMP), die sich gemeinsam auch mit der allgemeinen Formel LiFe₍₁₋ₓ₎MnₓPO₄, wobei 0≤x<0,9 ist beschreiben lassen in Frage.

Die Eisenphosphate können in wasserfreier Form oder als wasserhaltige Eisenphosphate vorliegen, wobei als letztere beispielsweise Vivianit, welches sich im allgemeinen durch die Formel Fe₃(PO₄)₂·8H₂O beschreiben lässt, Metavivianit, welches sich im allgemeinen durch die Formel Fe₂(PO₄)₂(OH)₂·6H₂O beschreiben lässt, Strengite, welches sich im allgemeinen durch die Formel Fe(PO₄):2H₂O beschreiben lässt, Kryzhanovskite, welches sich im allgemeinen durch die Formel Fe₃(OH)₃(PO₄)₂ beschreiben lässt sowie Phosphoferrite, welches sich im allgemeinen durch die Formel Fe₃(H₂O)₃(PO₄)₂ beschreiben lässt, zu nennen sind.

Diese Eisenphosphatverbindungen können selbstverständlich auch in beliebigen Mischungen eingesetzt werden.

Bevorzugte Eisenphosphatverbindungen sind LFP und/oder LFMP mit der allgemeinen gemeinsamen Formel LiFe₍₁₋ₓ₎MnₓPO₄, wobei 0≤x<0,9, insbesondere 0≤x<0,6 ist.

### Material

Das Material enthaltend wenigstens eine Eisenphosphatverbindung kann zu 100% aus Eisenphosphatverbindungen bestehen, zumeist enthält es diese aber nur anteilig. Bevorzugt enthält das eingesetzte Material die Eisenphosphatverbindungen in Summe von 1 bis 40 Gew.-%, vorzugsweise von 1 bis 15 Gew.-%.

Das eingesetzte Material enthält wenigstens eine Eisenphosphatverbindung ausgewählt aus der Gruppe bestehend aus Eisenphosphaten, insbesondere Eisen(II)-phosphat, Eisen(III)-phosphat und Eisen(III)-pyrophosphat, Lithiumeisenphosphat (LFP), Lithiumeisenmanganphosphat (LFMP), insbesondere LFP und/oder LFMP mit der allgemeinen gemeinsamen Formel LiFe₍₁₋ₓ₎MnₓPO₄, wobei 0≤x<0,9, insbesondere 0≤x<0,6 ist, oder Mischungen davon.

Bevorzugt wird ein LFP- und/oder LFMP-haltiges Material. Als solches wird für das erfindungsgemäße Verfahren insbesondere ein Material verwendet, enthaltend einen Anteil von 5 bis 100 Gew.-%, vorzugsweise 40 bis 99 Gew.-%, insbesondere 50 bis 99 Gew.-%, besonders bevorzugt von 70 bis 99 Gew.-% an LFP und/oder LFMP.

Bevorzugt ist die Beschreibung der Zusammensetzung des eingesetzten Materials auch über die Bestimmung des Gewichtsanteils bestimmter Elemente in dem eingesetzten vorzugsweise LFP- und/oder LFMP-haltigen Material möglich, jeweils bezogen auf die Menge an Material, wobei das eingesetzte Material vorzugsweise enthält:
1 bis 36 Gew.-% Fe, davon vorzugsweise 2 bis 100 Gew.-% als Eisenphosphatverbindung
1 bis 20 Gew.-% P,
0 bis 35 Gew.-% Mn,
1 bis 8 Gew.% Li und
1 bis 55 Gew. %, vorzugsweise 1 bis 40 Gew.-%, insbesondere 1 bis 30 Gew.-% Kohlenstoff.

Diese Mengenangaben zu den Elementen können einerseits aus dem LFP, dem LFMP, aber auch von den übrigen Bestandteilen des eingesetzten Materials stammen, wie beispielsweise aus Resten metallischer Bestandteile. Die Bestimmung der elementaren Anteile erfolgt vorzugsweise über die klassischen Methoden für die Elementaranalyse. Die Art und Menge der enthaltenden Eisenphosphatverbindung wird vorzugsweise über die Methode der Röntgenstreuung XRD an einem Pulver in Reflektion mit einer Cu-K_{α} Strahlung bestimmt. Die erhaltenen Reflexe werden zum Beispiel mit Daten der ICDD (International Centre for Diffraction Data) abgeglichen und die erhaltenen eisenphosphathaltigen Phasen zugeordnet. Für Lithiumeisenphosphat werden hier die Reflexe der JCPDS (International Centre for Powder Diffraction Data Sample) Karte #83-2092 zum Vergleich herangezogen.

Bevorzugt enthält das eingesetzte Material weiterhin 1 bis 55 Gew.-%, vorzugsweise 1 bis 40 Gew.-%, insbesondere 1 bis 30 Gew.-% an Kohlenstoff, insbesondere Grafit und/oder Ruß. Bevorzugt beträgt die Summe an LFP- und/oder LFMP und Kohlenstoff im eingesetzten vorzugsweise LFP- und/oder LFMP-haltigen Material mehr als 70 Gew.-%, vorzugsweise mehr als 80 Gew.-%, besonders bevorzugt mehr als 90 Gew.-%.

Üblicherweise werden die LFP und/oder LFPM-haltigen Batteriezellen soweit möglich mechanisch zerlegt und der Rest, enthaltend das Kathoden- und Anodenmaterial, ggf. Binder und weitere Bestandteile, zu einer Masse zerkleinert, die aufgrund des dunklen LFP/LFMP und des graphithaltigen Anodenmaterials schwarz ist und daher "Schwarze Masse" genannt wird. Die Schwarze Masse kann, bedingt durch eine technisch unvollständige Trennung, auch Reste anderer Batteriebestandteile, beispielsweise Metalle, enthalten.

Das Material kann daher auch die sogenannte Schwarze Masse sein, mit einem Anteil an Eisenphosphatverbindungen von 5 bis 90 Gew.-%.

Das eingesetzte Material kann auch Metalle, bevorzugt von 0 bis 15 Gew.-%, vorzugsweise 0 bis 5 Gew.-% enthalten, insbesondere Al, Cu, Co und Ni können enthalten sein.

Der Aluminiumanteil, bestimmt als elementares Aluminium, eingesetzte Material ist bevorzugt kleiner als 10 Gew.-%, insbesondere kleiner als 5 Gew.-%.

Bevorzugt ist, dass das eingesetzte Material vorzugsweise weniger als 10 Gew.-%, insbesondere weniger als 1 Gew.-%, besonders bevorzugt weniger als 0,1 Gew.-% an Polymerpartikel, insbesondere Plastik wie Polyethylen und/oder Polypropylen enthält.

Auch ist es bevorzugt, wenn das eingesetzte Material weniger als 5 Gew.-% an PVDF (Polyvinylidenfluorid) und/oder anderer Binder wie beispielsweise Carboxymethylcellulose oder Alginate enthält. Bevorzugt ist der Gehalt an allen Bindern kleiner 5 Gew.-%. Bevorzugt beträgt der VOC Gehalt des eingesetzten Materials weniger als 1 Gew.-%, insbesondere weniger als 0,1 Gew.-%, besonders bevorzugt weniger als 0,01 Gew.-%. Unter VOC (volatile organic compounds) werden vorzugsweise organische Verbindungen mit Siedepunkten im Bereich von 50 bis 260°C, bei einem Standarddruck von 101,3 kPa verstanden.

Bevorzugt wird als LFP- und/oder LFMP-haltiges Material die Schwarze Masse aus einer Batteriezerkleinerung eingesetzt.

Das eingesetzte Material hat vorzugsweise eine mittlere Teilchengröße von 0,1 µm bis 10 mm. Die Teilchengröße kann je nach Dimension einfach über eine Siebung bestimmt werden oder für kleinere Teilchen über die Methode der Laserbeugung respektive Laserstreuung. Die jeweils am besten einzusetzende Methode ist dem Fachmann bekannt.

Bei dem eingesetzten vorzugsweise LFP- und/oder LFMP-haltigen Material kann es sich auch um ein beschichtetes Material handeln. Als Beschichtungsmittel sind vorzugsweise Kohlenstoff, insbesondere Grafit, sowie Metalloxide zu nennen.

### Alkalichloride

Als Alkalichloride kommen vorzugsweise NaCl, KCl, LiCI, sowie Mischungen davon in Frage. Bevorzugt ist NaCl oder KCl oder eine Mischung von NaCl und KCI. Sofern NaCl in Mischung mit weiteren Alkalichloriden eingesetzt wird, insbesondere mit KCl, beträgt das Mischungsgewichtsverhältnis vorzugsweise 10 : 1 bis 0,1 : 1, insbesondere von 5 : 1 bis 0,5 : 1. Bevorzugt wird Alkalichlorid in einer Menge von 1 bis 5 Mol, bezogen auf jeweils 1 Mol vorhandenem Eisen - bestimmt durch Elementanalytik - verwendet.

### Erdalkalichloride

Als Erdalkalichloride kommen insbesondere MgCl₂, CaCl₂ oder Mischungen davon in Frage. Bevorzugt ist MgCl₂.

Bevorzugt wird eine Mischung von Erdalkalichloriden und Alkalimetallchloriden , insbesondere MgCl₂ und NaCl und/oder KCl, in einem Gewichtsverhältnis von 4 : 1 bis 0,25 : 1, insbesondere von 2 : 1 bis 1 : 2 eingesetzt. Besonders bevorzugt wird eine Mischung aus KCl, NaCl und MgCl₂ eingesetzt.

Ebenfalls besonders bevorzugt wird ein Gemisch von MgCl₂ und KCI mit einem Gewichtsverhältnis von 3 : 1 bis 0,5 : 1 eingesetzt.

### Sonstiges

Besonders bevorzugt ist ein molares Verhältnis an Chlor aus den eingesetzten Alkalimetallchloriden und Erdalkalichloriden zu im Material enthaltenden Phosphat-Gruppen im Bereich von 1 : 1 bis 4 : 1, bevorzugt von bei 2,3 : 1 bis 3,5 : 1 mol/mol.

### Verfahren

Die Einsatzstoffe, das Material und einzusetzendes Alkalimetallchlorid und/oder Erdalkalimetallchlorid werden vorzugsweise in trockener Form in einem Mischer gemischt. Bevorzugt wird als Mischer ein Schaufelmischer oder auch Mühlen, wie etwa in einer Kugelmühle eingesetzt. Letztere haben den Vorteil, durch Zerkleinerung auch eine bessere Homogenisierung der eingesetzten Edukte zu erreichen.

Vorteilhaft ist es, bereits den Mischschritt der Edukte in einer Inertgasatmosphäre durchzuführen, vorzugsweise wasserfrei, um die möglicherweise enthaltende hygroskopische Komponenten vor einer Wasseraufnahme zu schützen, die sich nachteilig auf die Prozessausbeute auswirken könnte.

Auch die Umsetzung an sich erfolgt bevorzugt unter Luft- und Wasserausschluss. Als bevorzugte Inertgase sind insbesondere Stickstoff, Argon oder Kohlendioxid zu nennen. Bevorzugt enthält die Inertgasatmosphäre weniger als 200 ppm, insbesondere weniger als 100 ppm Sauerstoff.

Die Umsetzung der Eisenphosphatverbindungen kann dann in einem Wirbelbett- oder Schüttbett- oder Fließbettreaktor, in einem Schachtofen oder in einem vorzugsweise gasdichten Ofen erfolgen, wie er am einfachsten als indirekt beheizter Rohrofen oder Drehrohrofen konzipiert werden kann. Optional kann man vor der Einbringung des Materials in einen Ofen das Material auch in eine Form bringen, zum Beispiel durch Brikettieren, Extrudieren oder Pelletieren, mit ggf. anschließender thermische Vorbehandlung bei 100 bis 199°C.

Hierfür können Hilfshilfsmittel wie Schichtsilikate insbesondere Bentonite sowie Ligninsulfonat, Methylcellulose, Wasserglas, Stärke oder andere verwendet werden. Die bei der Reaktion entstehenden, bei der Reaktionstemperatur flüchtigen, Produkte, hier vor allem Eisenchlorid, aber auch Aluminiumchloride und ggf. weitere Schwermetallchloride, werden bevorzugt an einer kalten Stelle bei Temperaturen unter 150°C gemeinsam resublimiert und gesammelt oder an unterschiedlich kühlen Stellen resublimiert und getrennt gesammelt.

Bevorzugte Abscheidetemperaturen für FeCl₂ sind kleiner gleich 700°C, vorzugsweise kleiner gleich 600°C. Im Falle von Eisen(III)chlorid kann die Temperatur zur Resublimation auch bei kleiner 307°C liegen.

Eisen(III)chlorid und auch AlCl₃, sofern Aluminium in dem eingesetzten Material enthalten ist, lassen sich aus dem Abgasstrom vorzugsweise durch Resublimation an unterschiedlich kühlen Oberflächen abscheiden und voneinander trennen. Sofern das Eisen(III)chlorid zusammen mit AlCl₃ im Abgasstrom vorhanden ist, können die jeweiligen Chloride aufgrund genügend unterschiedlicher Siedepunkte auch fraktioniert an verschiedenen Oberflächen mit unterschiedlichen Temperaturen resublimiert und dadurch sehr sauber getrennt werden. Bevorzugte Abscheidetemperaturen sind für FeCl₂ kleiner als 700°C, insbesondere kleiner 699°C bis 307°C, für FeCl₃ kleiner 307°C, insbesondere 150°C bis 300°C und für AlCl₃ kleiner 150°C, insbesondere 110°C bis 149°C.

Das erfindungsgemäß wiedergewonnene Eisen in Form von Eisen(III)chlorid und/oder Eisen(II)chlorid ist bereits sehr rein und kann in die gewünschte Rohstoffform des Eisens beispielsweise für die erneute Herstellung von LFP und/oder LFMP überführt werden. Als Beispiele sind hier das Eisensulfat, Eisennitrat, Eisenphosphat oder die unterschiedlichsten Formen des Eisenoxids zu nennen.

Alternativ kann das Eisenchlorid, auch ohne dass es durch Resublimation abgeschieden wurde, direkt als Gasstrom in ein wässriges Medium, enthaltend Schwefelsäure, Salpetersäure oder Phosphorsäure, eingeleitet werden und dadurch zur Bildung entsprechender Eisen(III)sulfate, -nitrate oder -phosphate gebracht werden. Ggf. wird bei der Umsetzung ein geeignetes Reduktionsmittel mitverwendet, um zu einem Eisen(II)sulfat, Eisen(II)nitrat bzw. Eisen(II)phosphat zu gelangen.

Bevorzugt ist jedoch die Abtrennung von Eisenchlorid aus dem Abgasstrom durch Resublimation.

In dem Abgasstrom befindet sich neben gasförmigem Eisenchlorid, wie Eisen(III)chlorid oder Eisen(II)chlorid, und ggf. auch AlCl₃, sofern Aluminium in dem eingesetzten Material enthalten ist, sowie ggf. NaCl, sowie ggf. flüchtige Chloride weiterer Metalle, sofern diese Metalle in der Schwarzen Masse vorhanden waren.

Der Rückstand nach der Umsetzung enthält vorzugsweise Phosphate der eingesetzten Alkali- und/oder Erdalkalimetallgruppe.

Die im Rückstand enthaltenen Lithiumionen können durch Ausschütteln des trockenen Rückstandes mit einem geeigneten, nicht-wässrigen Lösungsmittel extrahiert werden. Zu diesen geeigneten Lösungsmitteln gehören Alkohole, Ester oder Ether, Ketone oder Nitrile oder Mischungen derselben, gegebenenfalls auch in Mischungen mit Wasser.

Der nach der Extraktion erhaltene, vorzugsweise lithiumverarmte bis -freie Rückstand wird vorzugsweise durch Zugabe von 0,1 bis 5 mol Phosphorsäure pro mol Phosphat, bevorzugt 0,2 bis 1 mol Phosphorsäure pro mol Phosphat des Rückstandes behandelt. Der Rückstand der Reaktion kann so in eine lösliche Form überführt werden, in der er sich als solches zum Einsatz in der Landwirtschaft eignet.

Als unlöslicher Rückstand bleibt vorzugsweise Kohlenstoff zurück, sofern dieser in dem eingesetzten Material enthalten war. Die übrigen wasserlöslichen Bestandteile können dann ggf. nach Ermittlung ihrer möglichen Existenz nach dem klassischen H₂S-Trennungsgang voneinander in Form ihre Sulfide, Chloride, Phosphate, Fluoride oder sonstigen Fällungsverbindungen getrennt und isoliert werden.

### Temperatur

Bevorzugt erfolgt die Umsetzung bei einer Temperatur von 400 bis 900°C. Die Umsetzung dauert üblicherweise 5 Minuten bis 10 Stunden, bevorzugt 2 bis 5 Stunden.

Sofern das eingesetzte Material einen Binderanteil von größer als 1 Gew.-%, bezogen auf das Material, besitzt, erfolgt vorzugsweise eine Herauslösung durch eine Behandlung mit organischem Lösungsmittel, insbesondere Aceton, Ethylacetat, Methylethylketon, Tetrahydrofuran (THF), Acetessigester, Acetylaceton, Dioxan und/oder Acetanhydrid sowie Mischungen davon, um den Gehalt auf weniger als 0,1 Gew.-% zu reduzieren.

Sofern das Material einen Polymeranteil, insbesondere Plastik von größer als 1 Gew.-% enthält, ist es vorteilhaft, das Material zunächst einer thermischen Behandlung bei einer P001 01205PRIO

Temperatur von 300°C bis 600°C zu unterziehen, vorzugsweise unter Inertgas, um den Polymeranteil auf weniger als 0,1 Gew.-% zu reduzieren. Ein möglicher Binderanteil von größer als 1 Gew.-% kann neben einer Herauslösung mit organischen Lösungsmittel alternativ oder zusätzlich ebenfalls durch eine thermische Behandlung bei einer Temperatur von 300°C bis 700°C, vorzugsweise unter Inertgas, auf weniger als 0,1 Gew.-% reduziert werden.

ADAM C ET AL: "Thermochemical treatment of sewage sludge ashes for phosphorus recovery", WASTE MANAGEMENT, ELSEVIER, NEW YORK, NY, US,Bd. 29, Nr. 3, 1. März 2009, Seiten 1122-1128, beschreibt die Aufarbeitung von Klärschlammasche zur Herstellung von Düngemittel enthaltend Phosphor.

### Reaktor

Das nach dem erfindungsgemäßen Verfahren einzusetzende Material wird vorzugsweise in einen Reaktor gegeben, der vorzugsweise mit einer unter den einzustellenden Reaktionsbedingungen resistenten Schicht versehen ist. Bevorzugte Reaktormaterialien sind mit Nickel oder Grafit beschichtete Reaktoren. Als solche können Rohrreaktoren wie Drehrohrreaktoren oder andere Reaktoren verwendet werden. Besonders bevorzugt sind Reaktoren, die eine Bewegung des Materials während der Reaktion erlauben. Dabei sind Wirbelbettvorrichtungen, sowie Drehrohrreaktoren oder eine Reaktion in einer Extrudervorrichtung mit Schneckenvortrieb bevorzugt.

Im Falle eines Rohreaktors beträgt die Reaktorlänge vorzugsweise 0,2 bis 40m. Die Verweilzeit im Reaktor während der Reaktion richtet sich in der Regel nach der Temperatur. Dabei kann sich die Verweilzeit im Reaktor beispielsweise von einer Minute bis 5 Stunden hinziehen. Das erfindungsgemäße Verfahren kann als Batch oder kontinuierlich betrieben werden.

Vorzugsweise befindet sich an dem Reaktor ein Outlet für den Abgasstrom. In dem Abgasstrom befinden sich die gasförmigen Reaktionsprodukte und flüchtigen Bestandteile des Materials, die zusammen aus dem Reaktionsraum abgeleitet werden können. Die mögliche Abtrennung von festen Bestandteilen wie Feinstaub von gasförmigen Bestandteilen aus dem Abgasstrom kann beispielsweise durch Vorrichtungen wie einen Zyklon erfolgen.

Die Reaktion ist vorzugsweise beendet, wenn der Anteil an Eisen im Rückstand weniger als 0,05 Gewa.-% erreicht hat.

Bevorzugte Abscheidetemperaturen für FeCl₂ sind kleiner 700°C, FeCl₃ kleiner gleich 307°C, insbesondere 150°C bis 300°C und für AlCl₃ kleiner gleich 150°C, insbesondere 110°C bis 149°C.

Das nach einem H₂S-Trennungsgang verbleibende schwerlösliche Mangansulfid kann mit Luft zum Mangansulfat umgesetzt und so rückgewonnen und ggf. zur Herstellung von LFMP wiedereingesetzt werden.

### Beispiele

### Analytik

Die Analytik wurde, nach Auflösen der LFF-Probe LFP respektive des Sublimats mit geeigneten Säuren, in einem ICP-OES untersucht, nach Kalibrierung für das jeweilige Element durch Standardlösungen.

Röntgendiffraktogramme (XRD) wurden an Pulvern (Flachpräparat) zwischen 2Theta Winkeln von 0 und 60° mit einer Wellenlänge von 0,154 nm aufgenommen.

### Beispiel 1: LFP NaCl/MgCl₂

5,02g Lithiumeisenphosphat (31,7 mmol Phosphat) (Lithiumeisen-phosphat, die Struktur wurde mit XRD bestätigt; außer von Lithiumeisenphosphat wurden keine weiteren Reflexe detektiert), mit folgenden Analysendaten (in Gewichtsprozent): Fe 34,6%, Phosphat 60,9%, Li 4,6%, C: 1,8%, mit einer mittleren Partikelgrößenverteilung d10 0,35µm, d50 0,62µm, d100 6,7µm, wird mit 1,83g NaCl (31,3 mmol Chlorid) und 2,24g wasserfreiem MgCl₂ (47 mmol Chlorid) innig gemischt und homogenisiert und in ein Quarzglasrohr (Durchmesser: 120 mm) eingebracht, das in einem Rohrofen liegt.

Es wird ein Strom trockener Stickstoff (0,3 Liter pro Minute; Gehalt an Sauerstoff < 100ppm v/v) durch den Reaktor geleitet und auf 750°C erhitzt und sechs Stunden bei der Temperatur gehalten. Es scheidet sich an den kälteren, aus dem Ofen herausragenden Quarzrohr bei etwa 160°C ein brauner Niederschlag (1,17 g) ab. Der Niederschlag besteht zu 82 Gew.-% aus einer Mischung von Eisen(II)chlorid und Eisen(III)chlorid und zu 15 Gew.-% aus NaCl. Durch Absenkung der Reaktionstemperatur kann der Anteil an NaCl reduziert werden.

Der Gewichtsverlust der Probe liegt bei 34 Gew.-%. Der Rückstand enthält deutlich weniger Eisen als das Edukt und ist daher heller.

Der Rückstand wird mit 50ml wasserfreiem Ethanol aufgenommen und anschließend filtriert. Die Prozedur wird zweimal wiederholt. Die Filtrate werden vereinigt, das Ethanol verdampft. Die zurückbleibende Masse enthält die Lithiumverbindungen.

Der nach der Ethanol-Extraktion zurückbleibende Rückstand wurde erst getrocknet, dann mit konzentrierter Phosphorsäure verrieben. Das so erhaltenen lösliche Phosphat hat einen sehr geringen Eisengehalt und kann daher zur Pflanzendüngung verwendet werden.

### Beispiel 2: LFP KCl/MgCl₂

5g Lithiumeisenphosphat (31,7 mmol Phosphat) (Lithiumeisen-phosphat, die Struktur wurde mit XRD bestätigt, außer von Lithiumeisenphosphat wurden keine weiteren Reflexe detektiert), mit folgenden Analysendaten (in Gewichtsprozent): Fe 34,6%, Phosphat 60,9%, Li 4,6%, C: 1,8%, mit einer mittleren Partikelgrößenverteilung d10 0,35µm, d50 0,62µm, d100 6,7µm, wird mit 3g (40mmol Chlorid) KCI und 2g (42 mmol Chlorid) wasserfreiem MgCl₂ innig gemischt und homogenisiert und in ein Quarzglasrohr (Durchmesser: 120 mm) eingebracht, das in einem Rohrofen liegt.

Es wird ein Strom trockener Stickstoff (0,3 Liter pro Minute; Gehalt an Sauerstoff < 100ppm v/v) durch den Reaktor geleitet und auf 750°C erhitzt und zwölf Stunden bei der Temperatur gehalten. Es scheidet sich an den kälteren, aus dem Ofen herausragenden Quarzrohr bei etwa 160°C ein brauner Niederschlag (3,4 g) ab. Der Niederschlag besteht aus einer Mischung von Eisen(II)chlorid und Eisen(III)chlorid.

Der Gewichtsverlust der Probe liegt bei 45 Gew.-%, der Rückstand ist deutlich heller als das Edukt.

Der Rückstand wird mit 200ml wasserfreiem Ethanol aufgenommen und anschließend filtriert. Die Prozedur wird zweimal wiederholt. Die Filtrate werden vereinigt, das Ethanol verdampft. Die zurückbleibende Masse enthält die Lithiumverbindungen.

Der nach der Ethanol-Extraktion zurückbleibende Rückstand wurde erst getrocknet, dann mit konzentrierter Phosphorsäure verrieben. Das so erhaltenen lösliche Phosphat hat einen sehr geringen Eisengehalt und kann daher zur Pflanzendüngung verwendet werden.

## Patentansprüche

1. Verfahren zur Herstellung von Eisenchlorid, **dadurch gekennzeichnet, dass** man
i) ein Material enthaltend wenigstens eine Eisenphosphatverbindung mit wenigstens einem Alkalichlorid und/oder wenigstens einem Erdalkalichlorid bei einer Temperatur von 200 bis 1100°C in einer Inertgasatmosphäre umsetzt und
ii) das gebildete Eisenchlorid im Abgasstrom ableitet und isoliert.

2. Verfahren nach Anspruch 1, **dadurch gekennzeichnet, dass** aus dem Abgasstrom das Eisenchlorid in Schritt ii) durch Resublimation abgeschieden wird.

3. Verfahren nach Anspruch 1 oder 2, **dadurch gekennzeichnet, dass** das Eisenchlorid bei Temperaturen von kleiner 700°C abgeschieden wird, vorzugsweise für FeCl₂ bei kleiner 699°C bis 307°C, für FeCl₃ bei kleiner 307°C, insbesondere bei 150°C bis 300°C.

4. Verfahren nach wenigstens einem der Ansprüche 1 bis 3, **dadurch gekennzeichnet, dass** das eingesetzte Material wenigstens eine Eisenphosphatverbindung ausgewählt aus der Gruppe bestehend aus Eisenphosphaten, insbesondere Eisen(II)-phosphat, Eisen(III)-phosphat und Eisen(III)-pyrophosphat, Lithiumeisenphosphat (LFP), Lithiumeisenmanganphosphat (LFMP), insbesondere LFP und/oder LFMP mit der allgemeinen gemeinsamen Formel LiFe₍₁₋ₓ₎MnₓPO₄, wobei 0≤x<0,9, insbesondere 0≤x<0,6 ist, oder Mischungen davon enthält.

5. Verfahren nach wenigstens einem der Ansprüche 1 bis 4, **dadurch gekennzeichnet, dass** die Umsetzung mit wenigstens einem Alkalichlorid und wenigstens einem Erdalkalichlorid erfolgt.

6. Verfahren nach wenigstens einem der Ansprüche 1 bis 5, **dadurch gekennzeichnet, dass** die Umsetzung mit Natriumchlorid und Magnesiumchlorid oder Kaliumchlorid und Magnesiumchlorid erfolgt.

7. Verfahren nach wenigstens einem der Ansprüche 1 bis 6, **dadurch gekennzeichnet, dass** eine Mischung von Erdalkalichloriden und Alkalimetallchloriden in einem Gewichtsverhältnis von 4 : 1 bis 0,25 : 1, insbesondere von 2 : 1 bis 1 : 2 eingesetzt wird.

8. Verfahren nach wenigstens einem der Ansprüche 1 bis 7, **dadurch gekennzeichnet, dass** das eingesetzte Material
1 bis 36 Gew.-% Fe, davon vorzugsweise 2 bis 100 Gew.-% als Eisenphosphatverbindung
1 bis 20 Gew.-% P,
0 bis 35 Gew.-% Mn,
1 bis 8 Gew.% Li und
1 bis 55 Gew. % Kohlenstoff enthält.

9. Verfahren nach wenigstens einem der Ansprüche 1 bis 8, **dadurch gekennzeichnet, dass** das eingesetzte Material von 5 bis 100 Gew.-%, vorzugsweise 40 bis 99 Gew.-%, insbesondere 50 bis 99 Gew.-%, besonders bevorzugt von 70 bis 99 Gew.-% wenigstens einer Eisenphosphatverbindung enthält.

10. Verfahren nach wenigstens einem der Ansprüche 1 bis 9, **dadurch gekennzeichnet, dass** das molare Verhältnis an Chlor aus den eingesetzten Alkalimetallchloriden und Erdalkalichloriden zu im Material enthaltenden Phosphat-Gruppen im Bereich von 1 : 1 bis 4 : 1, bevorzugt von 2,3 : 1 bis 3,5 : 1 mol/mol liegt.

11. Verfahren nach wenigstens einem der Ansprüche 1 bis 10, **dadurch gekennzeichnet, dass** die Umsetzung bei einer Temperatur von 400°C bis 1000°C erfolgt.

## Claims

1. Process for producing iron chloride, **characterized in that** it comprises
i) reacting a material containing at least one iron phosphate compound with at least one alkali metal chloride and/or at least one alkaline earth metal chloride at a temperature of 200°C to 1100°C in an inert gas atmosphere and
ii) withdrawing and isolating the formed iron chloride in the offgas stream.

2. Process according to Claim 1, **characterized in that** the iron chloride is deposited from the offgas stream by resublimation in step ii).

3. Process according to Claim 1 or 2, **characterized in that** the iron chloride is deposited at temperatures of less than 700°C, preferably at less than 699°C to 307°C for FeCl₂ and at temperatures of less than 307°C, in particular at 150°C to 300°C, for FeCl₃.

4. Process according to at least one of Claims 1 to 3, **characterized in that** the employed material contains at least one iron phosphate compound selected from the group consisting of iron phosphates, in particular iron(II) phosphate, iron(III) phosphate and iron(III) pyrophosphate, lithium iron phosphate (LFP), lithium iron manganese phosphate (LFMP), in particular, LFP and/or LFMP having the common general formula LiFe₍₁₋ₓ₎MnₓPO₄, wherein 0≤x<0.9, in particular 0≤x<0.6, or mixtures thereof.

5. Process according to at least one of Claims 1 to 4, **characterized in that** the reaction is carried out with at least one alkali metal chloride and at least one alkaline earth metal chloride.

6. Process according to at least one of Claims 1 to 5, **characterized in that** the reaction is carried out with sodium chloride and magnesium chloride or potassium chloride and magnesium chloride.

7. Process according to at least one of Claims 1 to 6, **characterized in that** it employs a mixture of alkaline earth metal chlorides and alkali metal chlorides in a weight ratio of 4 : 1 to 0.25 : 1, in particular from 2 : 1 to 1 : 2.

8. Process according to at least one of Claims 1 to 7, **characterized in that** the employed material contains
1% to 36% by weight of Fe, preferably 2% to 100% by weight thereof as an iron phosphate compound,
1% to 20% by weight of P,
0% to 35% by weight of Mn,
1 to 8% by weight of Li and
1% to 55% by weight of carbon.

9. Process according to at least one of Claims 1 to 8, **characterized in that** the employed material contains from 5% to 100% by weight, preferably 40% to 99% by weight, in particular 50% to 99% by weight, particularly preferably from 70% to 99% by weight, of at least one iron phosphate compound.

10. Process according to at least one of Claims 1 to 9, **characterized in that** the molar ratio of chlorine from the employed alkali metal chlorides and alkaline earth metal chlorides to phosphate groups present in the material is in the range from 1 : 1 to 4 : 1, preferably from 2.3 : 1 to 3.5 : 1 mol/mol.

11. Process according to at least one of Claims 1 to 10, **characterized in that** the reaction is carried out at a temperature of 400°C to 1000°C.

## Revendications

1. Procédé de préparation de chlorure de fer, **caractérisé en ce qu'**on
i) transforme un matériau contenant au moins un composé de phosphate de fer avec au moins un chlorure de métal alcalin et/ou au moins un chlorure de métal alcalino-terreux à une température de 200 à 1100°C dans une atmosphère de gaz inerte et
ii) évacue et isole le chlorure de fer formé dans le flux d'effluents gazeux.

2. Procédé selon la revendication 1, **caractérisé en ce que** le chlorure de fer est séparé du flux d'effluents gazeux dans l'étape ii) par resublimation.

3. Procédé selon la revendication 1 ou 2, **caractérisé en ce que** le chlorure de fer est séparé à des températures inférieures à 700°C, de préférence, pour le FeCl₂, à moins de 699°C jusqu'à 307°C, pour le FeCl₃, à moins de 307°C, en particulier à 150°C jusqu'à 300°C.

4. Procédé selon au moins l'une des revendications 1 à 3, **caractérisé en ce que** le matériau utilisé contient au moins un composé de phosphate de fer choisi dans le groupe constitué par les phosphates de fer, en particulier le phosphate de fer (II), le phosphate de fer (III) et le pyrophosphate de fer (III), le phosphate de lithium-fer (LFP), le phosphate de lithium-fer-manganèse (LFMP), en particulier le LFP et/ou le LFMP présentant la formule générale commune LiFe₍₁₋ₓ₎MnₓP)₄, dans laquelle 0≤x<0,9, en particulier 0≤x<0,6, ou leurs mélanges.

5. Procédé selon au moins l'une des revendications 1 à 4, **caractérisé en ce que** la transformation est effectuée avec au moins un chlorure de métal alcalin et au moins un chlorure de métal alcalino-terreux.

6. Procédé selon au moins l'une des revendications 1 à 5, **caractérisé en ce que** la transformation est effectuée avec du chlorure de sodium et du chlorure de magnésium ou du chlorure de potassium et du chlorure de magnésium

7. Procédé selon au moins l'une des revendications 1 à 6, **caractérisé en ce qu'**un mélange de chlorures de métal alcalino-terreux et de chlorures de métal alcalin dans un rapport pondéral de 1:1 à 0,25:1, en particulier de 2:1 à 1:2, est utilisé.

8. Procédé selon au moins l'une des revendications 1 à 7, **caractérisé en ce que** le matériau utilisé contient
1 à 36% en poids de Fe, dont de préférence 2 à 100% sous forme de composé de phosphate de fer
1 à 20% en poids de P,
0 à 35% en poids de Mn,
1 à 8% en poids de Li et
1 à 55%en poids de carbone.

9. Procédé selon au moins l'une des revendications 1 à 8, **caractérisé en ce que** le matériau utilisé contient 5 à 100% en poids, de préférence 40 à 99% en poids, en particulier 50 à 99% en poids, de manière particulièrement préférée 70 à 99% en poids d'au moins un composé de phosphate de fer.

10. Procédé selon au moins l'une des revendications 1 à 9, **caractérisé en ce que** le rapport molaire du chlore des chlorures de métal alcalin et des chlorures de métal alcalino-terreux utilisés aux groupes phosphate contenus dans le matériau se situe dans la plage de 1:1 à 4:1, de préférence de 2,3:1 à 3,5:1 mole/mole.

11. Procédé selon au moins l'une des revendications 1 à 10, **caractérisé en ce que** la transformation est effectuée à une température de 400°C à 1000°C.
